# EUROPÄISCHE PATENTSCHRIFT

(11) **EP 1 476 323 B1**
(45) Veröffentlichungstag und Bekanntmachung des Hinweises auf die Patenterteilung: **22.07.2009**
(21) Anmeldenummer: 02792601.3
(22) Anmeldetag: 18.11.2002
(51) Int. Cl.: B60N 2/02, B60N 2/44, B60J 1/12, B60J 7/057

(54) **SPINDEL- ODER SCHNECKENANTRIEB FÜR VERSTELLEINRICHTUNGEN IN KRAFTFAHRZEUGEN**
SPINDLE OR WORM DRIVE FOR ADJUSTMENT DEVICES IN MOTOR VEHICLES
COMMANDE PAR BROCHE OU PAR VIS SANS FIN POUR DISPOSITIFS DE DEPLACEMENT DANS DES AUTOMOBILES

(30) Priorität: 13.02.2002 DE 10206524; 30.10.2002 DE 10250994
(43) Veröffentlichungstag der Anmeldung: 17.11.2004
(73) Patentinhaber: Brose Fahrzeugteile GmbH & Co. KG, Coburg, 96450 Coburg (DE)
(72) Erfinder: DOHLES, Dittmar, 96479 Weitramsdorf (DE); BREHM, Horst, 96103 Hallstadt (DE); HOFMANN, Jochen, 96257 Marktgraitz (DE); FISCHER, Markus, 96274 Itzgrund (DE); KRÖNER, Gregor, 96120 Bischberg (DE)
(74) Vertreter: Baumgärtel, Gunnar
(86) Internationale Anmeldenummer: PCT/DE2002/004282
(87) Internationale Veröffentlichungsnummer: WO 2003/068551

(56) Entgegenhaltungen:
- DE-A- 3 303 198
- DE-A- 19 861 100
- US-A- 5 467 957
- US-A- 6 073 893
- US-B1- 6 322 146
- PATENT ABSTRACTS OF JAPAN vol. 1997, no. 07, 31. Juli 1997 (1997-07-31) -& JP 09 066761 A (TACHI S CO LTD), 11. März 1997 (1997-03-11)

## Beschreibung

Die Erfindung betrifft einen Spindel- oder Schneckenantrieb für Verstelleinrichtungen in Kraftfahrzeugen, insbesondere für Sitzverstelleinrichtungen, Fensterheber und Schiebedächer gemäß dem Oberbegriff des Anspruchs 1.

Aus der DE 198 61 100 A1 ist ein Spindelantrieb für Verstelleinrichtungen in Kraftfahrzeugen mit einer feststehenden Spindel bekannt, die an einem ersten von zwei relativ zueinander verstellbaren Teilen befestigt ist, mit einem Getriebe, das am zweiten der relativ zueinander verstellbaren Teile angeordnet ist und mit einem Getriebegehäuse zur Aufnahme des Getriebes. Das Getriebegehäuse besteht aus zwei mittels Steckverbindung aneinander befestigten Gehäuseplatten, die als tragende, die Getriebekräfte aufnehmende Verbindungsstellen ausgebildet sind, an denen die Gehäuseplatten zusammengehalten werden. Die Steckverbindungen weisen ineinander fügbare erhabene Bereiche und Ausnehmungen auf, die zunächst eine Spielpassung bilden. Durch plastisches Verformen des Materials im Bereich der Steckverbindungen werden die Gehäuseplatten fixiert.

Aus der US 4,802,374 A ist ein Spindelantrieb für eine Sitzlängsverstellung in Kraftfahrzeugen bekannt, der eine mit der Verstellschiene der Sitzlängsverstellung verbundene Spindel enthält, die über eine Spindelmutter, ein Schneckenrad und eine mit einer Motorwelle verbundene Schnecke von einem Elektromotor antreibbar ist. Die Schnecke, das Schneckenrad und die Spindelmutter sind in einem Haltebügel mit zwei sich im rechten Winkel schneidenden zylindrischen Hülsen angeordnet. Ein mit der Bodenschiene der Sitzlängsverstellung verbundener Rückhalteflansch, der aus einer Klammer mit einer rechtwinkligen, fensterförmigen Öffnung besteht, umfasst mit dem Rahmen der fensterförmigen Öffnung die zylindrischen Hülsen des Haltebügels und sichert damit die Lage des Haltebügels.

Bei diesem aus der US 4,802,374 A bekannten Spindelantrieb bestimmen die Toleranzen der einzelnen Bauteile das Gesamtspiel des Spindelantriebs, so dass zur Herstellung einer Spielfreiheit des Spindelantriebs enge Toleranzen vorgegeben werden müssen, was einen erheblichen Herstellungsaufwand erfordert.

Ein weiterer Nachteil des bekannten Spindelantriebs besteht darin, dass der Rückhalteflansch zwar die Lage des Haltebügels sichert, aber keine Crashsicherheit bietet, da der Rückhalteflansch nur einen Teil des Haltebügels umfasst und im Falle eines Crashs verbogen wird, so dass die Kopplung zwischen der beweglichen Verstellschiene und der karosseriefesten Bodenschiene gelöst und damit ein mit der Verstellschiene verbundener Kraftfahrzeugsitz unkontrolliert bewegt wird.

Der vorliegenden Erfindung liegt die Aufgabenstellung zugrunde, einen Spindel- oder Schneckenantrieb für Verstelleinrichtungen in Kraftfahrzeugen der eingangs genannten Gattung zu schaffen, der eine spielfreie, vor Verschmutzung geschützte Lagerung der Getriebeelemente, eine crashsichere Anbindung des Getriebes und damit der Verstelleinrichtung und eine bei Bedarf um mindestens eine Achse schwenkbare Lagerung des Getriebes gewährleistet.

Diese Aufgabe wird erfindungsgemäß durch die Merkmale des Anspruchs 1 gelöst.

Die erfindungsgemäße Lösung schafft eine spielfreie, vor Verschmutzung geschützte Lagerung der Getriebeelemente sowie eine crashsichere Abstützung des Getriebes und damit der zueinander beweglichen Teile der Verstelleinrichtung sowie eine Schwenkbarkeit des Getriebes zur Anbindung von um eine Achse schwenkbaren Verstellteilen.

Der erfindungsgemäßen Lösung liegt der Gedanke zugrunde, die Getriebeelemente in einem die Getriebeelemente kapselförmig umschließenden Getriebegehäuse vor Verschmutzung und Beschädigung gesichert anzuordnen und das Getriebegehäuse wiederum spielfrei und bei Bedarf um mindestens eine Achse schwenkbar in einer Lagerschale anzuordnen, die zur Aufnahme von Crashkräften bestimmt und geeignet ist und somit eine crashsichere Abstützung des Getriebes zu gewährleisten, so dass die relativ zueinander beweglichen Teile der Verstelleinrichtung auch im Crashfall miteinander verbunden bleiben.

Vorzugsweise besteht das Getriebegehäuse aus Kunststoff, während die Lagerschale aus einem zur Aufnahme von Crashkräften geeigneten Werkstoff, insbesondere aus einem Metallwerkstoff besteht. Dies ermöglicht zum einen eine einfache Herstellung des Getriebegehäuses beispielsweise im Spritzgussverfahren mit hoher Passgenauigkeit, während die Crashkräfte von der Lagerschale aus Metall aufgenommen werden, so dass das Getriebegehäuse selbst nicht zur Aufnahme der Crashkräfte dimensioniert werden muss, da diese über die Lagerschale großflächig auf das Getriebegehäuse verteilt werden.

Die Schwenkbarkeit des Getriebegehäuses um eine Achse, beispielsweise um eine senkrecht zur Spindel oder Zahnstange verlaufende Schwenkachse, wird vorzugsweise durch ein konkaves oder konvexes Gehäuseteil des Getriebegehäuses und einen den konkaven oder konvexen Gehäuseteil umfassenden konvexen oder konkaven Lagerschalenabschnitt ermöglicht.

In einer besonderen Ausführungsform des Antriebs ist die Lagerschale zweiteilig ausgeführt; so besteht die Lagerschale aus zwei ineinander steckbaren Lagerplatten, die nach der Einfassung des Getriebegehäuses miteinander verbindbar und an dem zweiten der relativ zueinander verstellbaren Teile befestigbar sind.

Die Zusammensetzung der Lagerschale aus zwei ineinander steckbaren Lagerplatten ermöglicht eine einfach zu montierende spielfreie Anpassung der Lagerschale an das Getriebegehäuse, da die Lagerplatten um das Getriebegehäuse herumgesetzt und durch Zusammenschieben auf Null-Toleranz gebracht und in dieser Stellung beispielsweise durch Laserverschweißung miteinander verbunden werden können.

Die vorzugsweise U-förmig ausgebildeten Lagerplatten sind mittels der Seitenschenkel in Richtung der Längserstreckung der Spindel oder Zahnstange ineinandergreifend zusammensteckbar, wobei die Verbindungsschenkel zwischen den Seitenschenkeln Durchgangsöffnungen zur Durchführung der Spindel oder Zahnstange aufweisen, an die sich beidseitig die konkaven bzw. konvexen Lagerschalenabschnitte anschließen, die mit den konvexen bzw. konkaven Gehäuseteilen des Getriebegehäuses korrespondieren.

Diese Konstruktion kombiniert die Drehbeweglichkeit des Getriebes innerhalb der durch die Lagerplatten gebildeten Lagerschale mit einer spielfreien Verbindung zwischen dem Getriebegehäuse und der Lagerschale mit darin integrierter Führung der Spindel oder Zahnstange.

Vorzugsweise sind die Seitenschenkel der einen Lagerplatte als Laschen ausgebildet, die in den einen, mit einer fensterförmigen Öffnung versehenen Seitenschenkel und den anderen, mit einer U-förmigen Ausnehmung versehenen Seitenschenkel der anderen Lagerplatte eingreifen. Zum Ausgleich von Toleranzen ist der laschenförmige Seitenschenkel der einen Lagerplatte in Verbindungsrichtung der Lagerplatten länger als die fensterförmige Öffnung der anderen Lagerplatte und der laschenförmige Seitenschenkel der einen Lagerplatte kürzer als die U-förmige Ausnehmung des Seitenschenkels der anderen Lagerplatte, wobei der laschenförmige Seitenschenkel der einen Lagerplatte in Verbindungsrichtung der Lagerplatten durch einen die fensterförmige Öffnung des korrespondierenden Seitenschenkels der anderen Lagerplatte erweiternden Ausschnitt im Verbindungsschenkel der anderen Lagerplatte steckbar ist.

Da der laschenförmige Seitenschenkel der einen Lagerplatte in Verbindungsrichtung der Lagerplatten länger ist als die fensterförmige Öffnung und der die fensterförmige Öffnung umgebende Rahmen länger als der laschenförmige Seitenschenkel, sind die an den in Verbindungsrichtung der Lagerplatten vorderen Enden des laschenförmigen Seitenschenkels und dem die fensterförmige Öffnung umgebende Rahmen vorgesehenen Befestigungsstellen zur Anbringung des Spindel- oder Schneckengetriebes an einem der beiden relativ zueinander beweglichen Teile frei zugänglich.

Zur Verbindung der Lagerplatten unter Gewährleistung einer spielfreien Kopplung mit dem Getriebegehäuse werden die Seitenschenkel der Lagerplatten im montierten Zustand der Verstelleinrichtung formschlüssig, insbesondere über Schweißkonturen miteinander verbunden.

Bei einer weiteren besonderen Ausführungsform des Antriebs ist die Lagerschale vierteilig ausgeführt und besteht aus vier Lagerplatten; konkret ist vorgesehen, dass die Lagerschale eine Grundplatte, zwei Seitenplatten und eine Deckplatte aufweist, wobei die Grundplatte und die Deckplatte im Wesentlichen parallel zueinander verlaufen und durch die zwei im Wesentlichen parallel zueinander angeordneten Seitenplatten zueinander beabstandet gehalten werden und damit über die Seitenplatten miteinander in Verbindung stehen. Bei dieser weiteren besonderen Ausführungsform ist ein wesentlicher Vorteil darin zu sehen, dass Herstellungstoleranzen besonders einfach ausgeglichen werden können, da nämlich die relative Lage der vier Lagerplatten (Lagerschalen-Platten) zueinander sehr einfach nachjustiert werden kann. Somit kann in sehr einfacher Weise und damit vorteilhaft die Spielfreiheit zwischen Getriebegehäuse und Lagerschale eingestellt und dauerhaft fixiert werden.

Gemäß einer vorteilhaften Weiterbildung der weiteren besonderen Ausführungsform ist vorgesehen, dass die Grundplatte zwei schlitzförmige Öffnungen aufweist, von denen eine zur Aufnahme einer Befestigungslasche einer der beiden Seitenplatten und die andere Öffnung zur Aufnahme einer Befestigungslasche der anderen der beiden Seitenplatten dient.

Die eine Seitenplatte kann dabei vorteilhaft eine weitere Befestigungslasche aufweisen, die an einer der einen Befestigungslasche gegenüberliegenden Seite der Seitenplatte angeordnet ist und in eine randseitige Ausnehmung in der Deckplatte eingreift.

Zur Durchführung der Spindel oder der Zahnstange sind vorteilhaft Durchgangsöffnungen vorzusehen, die jeweils in den Seitenplatten angeordnet sind.

Um die Spielfreiheit zwischen Getriebegehäuse und Lagerschale besonders sicher zu fixieren, wird es als vorteilhaft angesehen, wenn die Seitenplatten und das Getriebegehäuse großflächig eng aneinander liegen. Dies lässt sich vorteilhaft erreichen, wenn die Seitenplatten konkave bzw. konvexe Lagerschalenabschnitte aufweisen, mit denen das Getriebegehäuse fixiert wird.

Die Durchgangsöffnungen in den Seitenplatten sowie die konkaven bzw. konvexen Lagerschalenabschnitte können dabei vorteilhaft derart zueinander angeordnet sein, dass die konkaven bzw. konvexen Lagerschalenabschnitte zu beiden Seiten der Durchgangsöffnungen zur Durchführung der Spindel oder Zahnstange angeordnet sind.

Nachdem die Grundplatte, die beiden Seitenplatten und die Deckplatte zueinander ausgerichtet sind und die Spielfreiheit zwischen Getriebegehäuse und Lagerschale gewährleistet ist, können die Grundplatte, die beiden Seitenplatten und die Deckplatte zur Fixierung miteinander verschweißt werden. Insbesondere Laserschweißen wird zur Fixierung als vorteilhaft angesehen. Dabei sollten die Schweißnähte zum Verbinden der Lagerplatten in Kehlen liegen, die sich in den Verbindungsbereichen zwischen den aufeinanderstehenden Lagerplatten bilden.
Ein vorteilhaftes Verfahren zur Herstellung des erfindungsgemäßen Spindel- und/oder Schneckenantriebs ist dadurch gekennzeichnet, dass die Getriebeelemente nach ihrer Verbindung mit der Spindel oder Zahnstange in eine Gehäuseschale des Getriebegehäuses eingesetzt und mit einem Antriebselement der Motorwelle verbunden werden, dass ein Getriebedeckel mit der Gehäuseschale des Getriebegehäuses zum Schließen des Getriebes verbunden wird und dass das fertiggestellte Getriebegehäuse spielfrei von einer Lagerschale eingefasst wird.

Bei einem zweiteiligen Antrieb kann dieser vorteilhaft derart montiert werden, dass die Lagerplatten von beiden Seiten über die Durchgangsöffnungen auf die Spindel aufgesteckt werden, dass die Seitenschenkel der Lagerplatten ineinandergeschoben werden bis die konkaven bzw. konvexen Lagerschalenabschnitte der Lagerplatten an den konkaven bzw. konvexen Gehäuseteilen des Getriebegehäuses spielfrei anlegen und dass die aneinanderstoßenden Seitenkanten der Seitenschenkel der Lagerplatten mittels Laserschweißung zumindest über einen Teil ihrer Länge miteinander verbunden werden.

Anschließend kann das eine Ende der Spindel mit einer Verbindungslasche verbunden werden, die an dem ersten der beiden relativ zueinander verstellbaren Teile befestigt wird, und die miteinander verbundenen Lagerplatten können mit dem zweiten der relativ zueinander verstellbaren Teile verbunden werden.

Bei einer vierteiligen Lagerschale wird es als vorteilhaft angesehen, wenn diese aus vier Lagerplatten gebildet wird, indem auf eine Grundplatte zwei Seitenplatten aufgesteckt werden, zwischen die beiden Seitenplatten das Getriebegehäuse eingesetzt wird, auf die zwei Seitenplatten eine Deckplatte aufgebracht wird und die vier Lagerplatten spielfrei zueinander ausgerichtet und miteinander fixiert werden.

Die zwei Seitenplatten können vorteilhaft von beiden Seiten über fensterförmige Durchgangsöffnungen auf die Spindel aufgesteckt werden und ausgerichtet werden, bis die konkaven bzw. konvexen Lagerschalenabschnitte der Seitenplatten an den konkaven bzw. konvexen Gehäuseteilen des Getriebegehäuses spielfrei anliegen.

Die Fixierung der vier Lagerplatten kann vorteilhaft durch Schweißen, insbesondere Laserschweißen, erfolgen. Um zu vermeiden, dass es beim Laserschweißen zu einem "Durchschweißen" kommt, sollte "stumpf", also in einem stumpfen Winkel geschweißt werden. Vorzugsweise sollte das Laserschweißen dabei in Kehlbereichen bzw. Kehlen erfolgen, die im Verbindungsbereich der aufeinanderstehenden Lagerplatten gebildet sind. Empfehlenswert ist es in diesem Zusammenhang, wenn das Laserschweißen in einem Winkel von jeweils ca. 45° zu den zu verbindenden Lagerplatten erfolgt.

Anhand eines in der Zeichnung dargestellten Ausführungsbeispiels soll der der Erfindung zugrundeliegende Gedanke näher erläutert werden. Es zeigen:
- Figuren 1 bis 6: ein Ausführungsbeispiel für einen erfindungsgemäßen Antrieb mit einer zweiteiligen Lagerschale; dabei zeigen
- Figuren 1 bis 3: verschiedene perspektivische Ansichten eines Spindelantriebs in einer Explosivdarstellung mit den einzelnen Getriebeelemente und einem Getriebegehäuse und zwei Lagerplatten zur Bildung einer Lagerschale vor deren spielfreier Verbindung,
- Figuren 4 und 5: zwei perspektivische Ansichten des spielfrei montierten Spindelantriebs,
- Figur 6: eine perspektivische Ansicht des Getriebegehäuses und der zu einer Lagerschale zusammengefügten Lagerplatten.
- Figuren 7 bis 16: zeigen ein Ausführungsbeispiel des erfindungsgemäßen Antriebs mit einer vierteiligen Lagerschale.

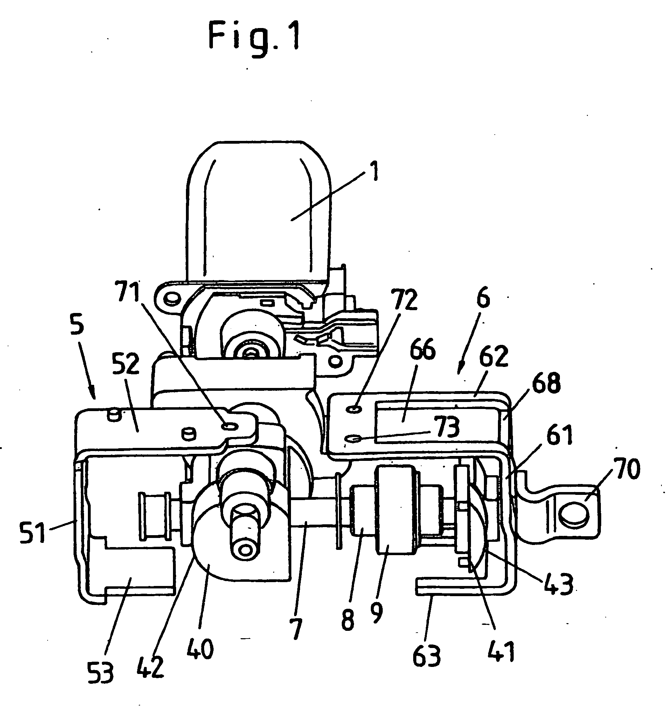

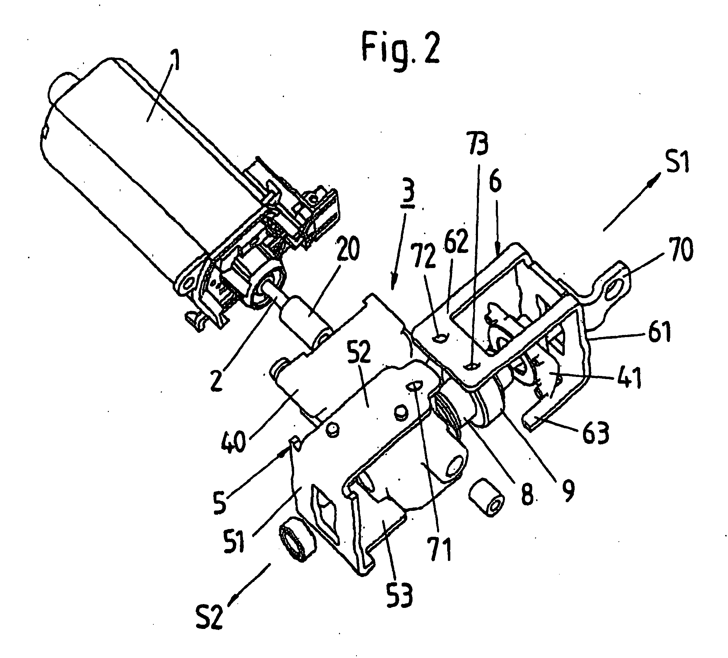

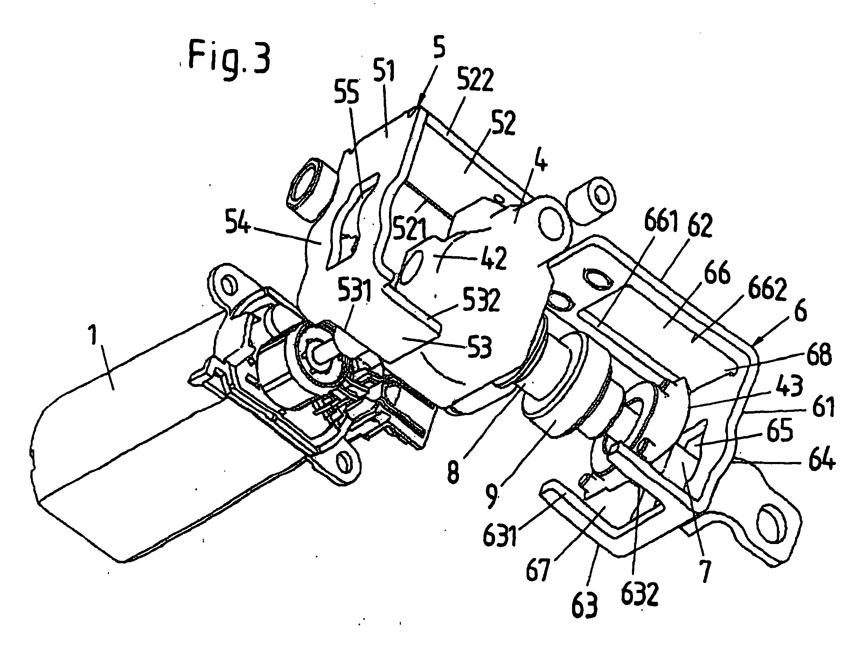

Der in den Figuren 1 bis 3 in perspektivischer Explosivdarstellung gezeigte Spindelantrieb weist einen Elektromotor 1 auf, dessen Motorwelle 2 mit einer Antriebsschnecke 20 verbunden ist, die mit einem Schneckenrad 9 eines Getriebes 3 kämmt. Das Schneckenrad 9 ist mit einer Spindelmutter 8 verbunden, deren Gewinde mit dem Gewinde einer Spindel 7 kämmt. Eine Drehung der Motorwelle 2 wird über die Antriebsschnecke 20 auf das Schneckenrad 9 und damit auf die einteilig mit dem Schneckenrad 9 verbundene Spindelmutter 8 übertragen, so dass bei drehfest angeordneter Spindel 7 diese durch die Drehung der Spindelmutter 8 ihre Lage in Bezug auf die Motorwelle 2 ändert, d.h. in Bezug auf die Motorwelle 2 gemäß Figur 2 je nach Drehrichtung des Elektromotors 1 in Richtung S1 oder S2 verschoben wird.

Die Getriebeelemente Antriebsschnecke 20, Spindelmutter 8 und Schneckenrad 9 sind in dem Getriebe 3 zusammengefasst, das ein Getriebegehäuse 4 aufweist, das aus einer Gehäuseschale 40 und einem Gehäusedeckel 41 besteht, der nach dem Einsetzen der Getriebeelemente 8, 9, 20 in die Gehäuseschale 40 mit der Gehäuseschale 40 verbunden wird.

Auf die aus dem Getriebegehäuse 4 herausragenden Enden der Spindel 7 werden zwei U-förmige Lagerplatten 5, 6 aufgesteckt, deren Seitenschenkel 52, 53 bzw. 62, 63 gegeneinander gerichtet sind und deren die Seitenschenkel 52, 53, bzw. 62, 63 miteinander verbindende Verbindungsschenkel 51, 61 fensterförmige Durchgangsöffnungen 55, 65 zur Aufnahme der Spindel 7 aufweisen. Die Seitenschenkel 52, 53 bzw. 62, 63 sind so gestaltet, dass sie mit geringem Spiel ineinandergreifen können und dabei einen spielbehafteten Formschluss miteinander eingehen. Zu diesem Zweck weist die eine Lagerplatte 5 zwei als Laschen ausgebildete Seitenschenkel 52, 53 auf, während der eine Seitenschenkel 62 der anderen Lagerplatte 6 eine rechteckeckige, fensterförmige Öffnung 66 aufweist, während der andere Seitenschenkel 63 U- oder klammerförmig ausgebildet ist und eine entsprechende Ausnehmung 67 aufweist.

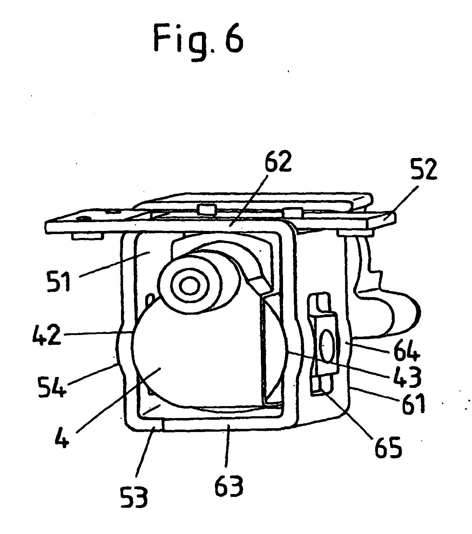

Werden die beiden Lagerplatten 5, 6 ineinandergefügt, so füllen die laschenförmigen Seitenschenkel 52, 53 der einen Lagerplatte 5 die fensterförmige Öffnung 66 bzw. die Ausnehmung 67 der Seitenschenkel 62, 63 der anderen Lagerplatte 6 im Wesentlichen aus. Zum Toleranzausgleich sind entweder die laschenförmigen Seitenschenkel 52, 53 der einen Lagerplatte 5 in Fügerichtung der Lagerplatten 5, 6 entweder geringfügig kürzer als die Länge der fensterförmigen Öffnung 66 bzw. Ausnehmung 67 der Seitenschenkel 62, 63 der anderen Lagerplatte 6 oder der laschenförmige Seitenschenkel 52 der einen Lagerplatte 5 ist länger als die fensterförmige Öffnung 66 des Seitenschenkels 62der anderen Lagerplatte 6 und in Verbindungsrichtung der Lagerplatten 5, 6 durch einen die fensterförmige Öffnung 66 des korrespondierenden Seitenschenkels 62 der anderen Lagerplatte 6 erweiternden Ausschnitt 68 im Verbindungsschenkel 61 der anderen Lagerplatte 6 steckbar, so dass der laschenförmige Seitenschenkel 52 der Lagerplatte 5 über die fensterförmige Öffnung 66 und damit über den Verbindungsschenkel 61 der anderen Lagerplatte 6 bzw. der die fensterförmige Öffnung 66 umgebende Rahmen des Seitenschenkels 62 über den Verbindungsschenkel 51 der Lagerplatte 5 hinausragen kann, wie der Darstellung gemäß Fig. 6 zu entnehmen ist. Nach der Verbindung der Lagerplatten 5, 6 zur Lagerschale sind die an den Enden der oberen Seitenschenkel 52, 62 der Lagerplatten 5, 6 vorgesehenen und über den jeweiligen Verbindungsschenkel 51, 61 der anderen Lagerplatte 5, 6 hinausragenden Befestigungsstellen 71, 72, 73 zur Befestigung des Spindel- oder Schneckengetriebes an dem einen der beiden relativ zueinander beweglichen Teile zugänglich.

Im Bereich der fensterförmigen Spindeldurchgänge 55, 65 der Lagerplatten 5, 6 weisen die Verbindungsschenkel 51, 61 in Bezug auf das Getriebegehäuse 4 konkave Wölbungen 54, 64 auf, die mit konvexen Gehäuseabschnitten 42, 43 des Getriebegehäuses 4, d.h. der Gehäuseschale 40 und des Gehäusedeckels 41 korrespondieren. Die Wölbungen 42, 43 des Getriebegehäuses 4 und die Wölbungen 54, 64 der Verbindungsschenkel 51, 61 korrespondieren miteinander, so dass das Getriebe 3 innerhalb der aus den Lagerplatten 5, 6 gebildeten Lagerschale um eine parallel zur Motorwelle 2 verlaufende Achse schwenken und damit Schwenkbewegungen der relativ zueinander beweglichen Teile ausgleichen kann, von denen ein Teil über eine Befestigungslasche 70 mit der Spindel 7 und das andere der beiden relativ zueinander beweglichen Teile über die Befestigungsstellen 71, 72, 73 mit der durch die Lagerplatten 5, 6 gebildeten Lagerschale verbunden ist.

Zur Montage des Spindel- oder Schneckenantriebs werden die Getriebeelemente, nämlich das Schneckenrad 9 und die Spindelmutter 8 nach ihrer Verbindung mit der Spindel 7 in die Gehäuseschale 40 des Getriebegehäuses 4 eingesetzt und mit der Schnecke 20, die an der Motorwelle 2 angebracht ist, verbunden. Nach dem Aufsetzen des Getriebedeckel 43 auf die Gehäuseschale 40 und deren Verbindung zum Getriebegehäuses 4 ist das Getriebes 3 komplettiert. Anschließend werden die Lagerplatten 5, 6 von beiden Seiten über die fensterförmigen Durchgangsöffnungen 55, 65 auf die Spindel 7 aufgesteckt und die Seitenschenkel 52, 53; 62, 63 der Lagerplatten 5, 6 ineinandergeschoben, bis die konkaven bzw. konvexen Lagerschalenabschnitte 54, 64 der Lagerplatten 5, 6 an den konkaven bzw. konvexen Gehäuseteilen 42, 43 des Getriebegehäuses 4 spielfrei anliegen. Schließlich werden die aneinanderstoßenden Seitenkanten 521, 522, 661, 662; 531, 532, 631, 632 der Seitenschenkel 52, 62 bzw. 53, 63 der Lagerplatten 5, 6 mittels Laserschweißung, die als Schweißkonturen 74, 75, 76 zumindest über einen Teil der Länge der Seitenkanten 521, 522, 661, 662; 531, 532, 631, 632 verlaufen, miteinander verbunden.

Zur Verbindung des Spindel- oder Schneckenantriebs mit dem Verstellantrieb wird das eine Ende der Spindel 7 mit einer Verbindungslasche 70 verbunden, die an dem ersten der beiden relativ zueinander verstellbaren Teile befestigt wird, während die miteinander zur Lagerschale verbundenen Lagerplatten 5, 6 mit dem zweiten der relativ zueinander verstellbaren Teile verbunden werden.

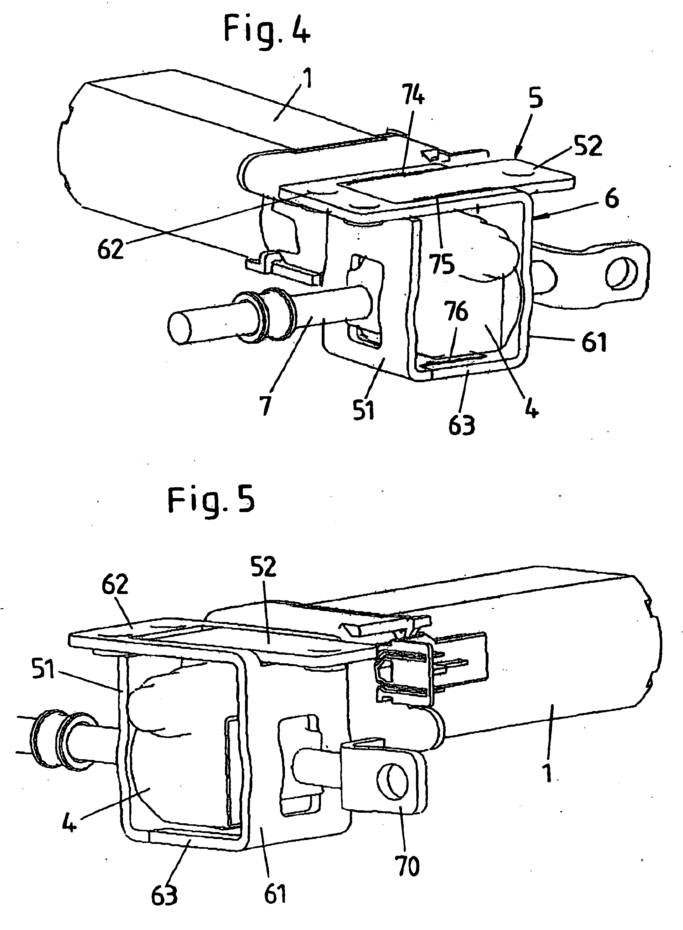

In dem in den Figuren 4 bis 6 dargestellten zusammengefügten Zustand des Getriebes 3 und der aus den Lagerplatten 5, 6 gebildeten Lagerschale befinden sich die Seitenkanten 521, 522 bzw. 531, 532 der laschenförmigen Seitenschenkel 52, 53 der einen Lagerplatte 5 in Anlage an den inneren Seitenkanten 661, 662 bzw. 631, 632 der fensterförmigen Öffnung 66 bzw. der Ausnehmung 67 der Seitenschenkel 62, 63 der anderen Lagerplatte 6. Wie den perspektivischen Darstellungen des zusammengesetzten Antriebs gemäß den Figuren 4 bis 6 zu entnehmen ist, ragen die Enden des laschenförmigen Seitenschenkels 52 der einen Lagerplatte 5 und des an die fensterförmige Öffnung 66 grenzenden Endes des Seitenschenkels 62 der anderen Lagerplatte 6 über die jeweiligen Verbindungsschenkel 51, 61 der jeweils anderen Lagerplatte 5, 6 hinaus und ermöglichen eine entsprechende Anpassung an die Abmessungen des Getriebegehäuses 4 im Verbindungsbereich, so dass eine spielfreie Verbindung des Getriebes 3 mit der Lagerschale 5, 6 gewährleistet ist.

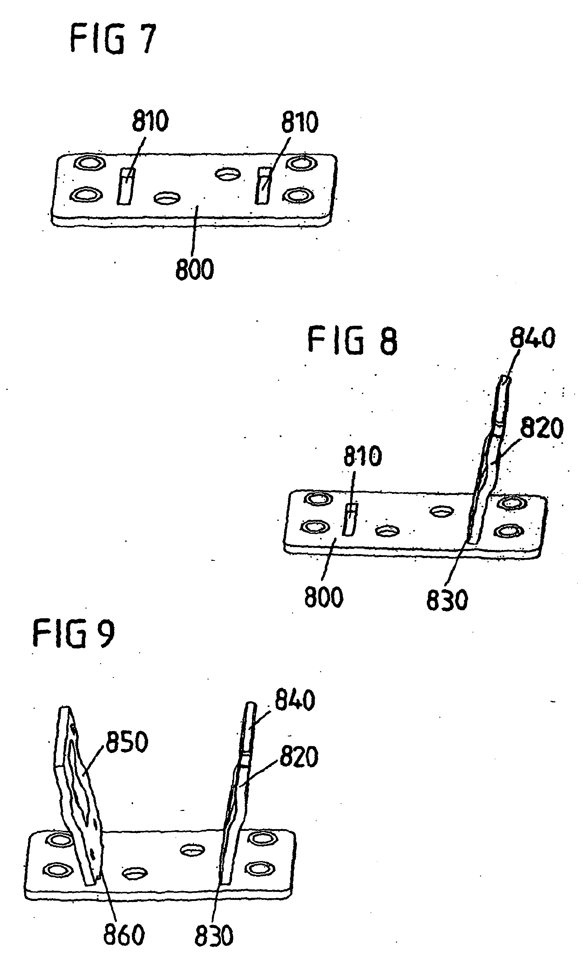

In den Figuren 7 bis 16 ist ein Ausführungsbeispiel für einen erfindungsgemäßen Antrieb dargestellt, bei dem die Lagerschale aus vier Lagerplatten besteht.

In der Figur 7 ist eine Grundplatte 800 gezeigt, die zwei schlitzförmige Öffnungen 810 aufweist. Eine Seitenplatte 820 mit einer Befestigungslasche 830 ist in eine der beiden schlitzförmigen Öffnungen 810 der Grundplatte 800 aufgesteckt; dies zeigt die Figur 8 im Detail. Die Seitenplatte 820 weist darüber hinaus eine weitere Befestigungslasche 840 auf, die weiter unten im Zusammenhang mit der Befestigung der Seitenplatte 820 an einer Deckplatte beschrieben wird.

In der Darstellung gemäß der Figur 9 ist auf die Grundplatte 800 eine zweite Seitenplatte 850 mit ihrer Befestigungslasche 860 aufgesteckt. Man erkennt in der Figur 9, dass die Breite der schlitzförmigen Öffnungen 810 geringfügig größer ist als die Breite der zugeordneten Befestigungslaschen 830 und 860, so dass die beiden Seitenplatten 820 und 850 ein geringfügiges Spiel aufweisen und somit leicht beweglich auf der Grundplatte 800 befestigt sind.

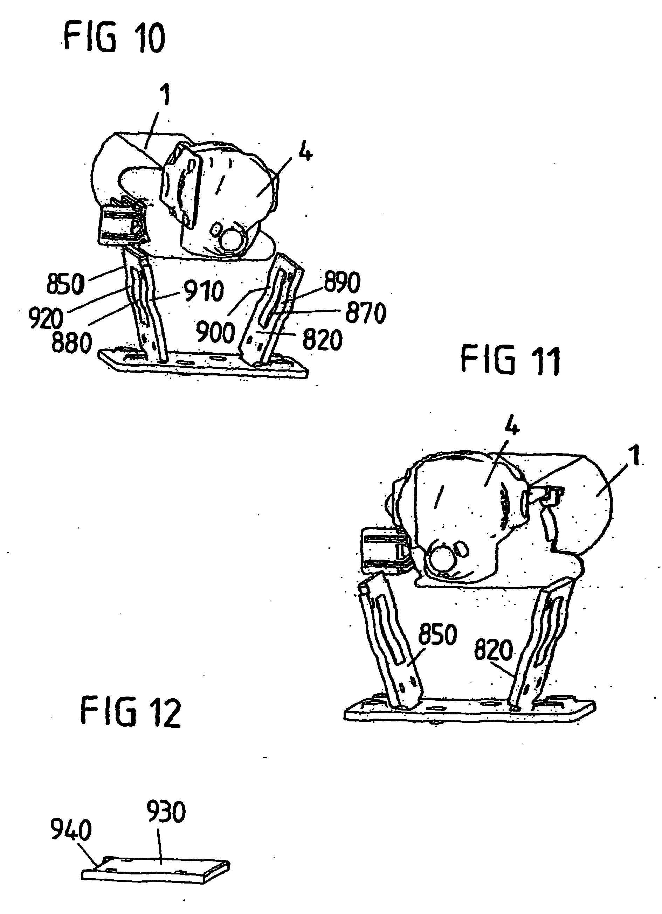

Die Figuren 10 und 11 zeigen, wie das bereits oben im Zusammenhang mit den Figuren 1 bis 6 näher beschriebene Getriebegehäuse 4 mit dem Elektromotor 1 in die Anordnung bestehend aus der Grundplatte 800 und den beiden Seitenplatten 820 und 850 eingefügt wird. Dabei zeigt die Figur 10 eine Ansicht von schräg links und die Figur 11 eine Ansicht von schräg rechts.

Im Übrigen ist in den Figuren 10 und 11 zu erkennen, dass jede der beiden Seitenplatten 820 und 850 jeweils eine Durchgangsöffnung 870 und 880 aufweist. Links und rechts von den Durchgangsöffnungen 870 und 880 - also zu beiden Seiten der Durchgangsöffnungen 870 und 880 - weist jede der beiden Seitenplatten 820 und 850 jeweils zwei konkave bzw. konvexe Lagerschalenabschnitte 890, 900, 910 und 920 auf. Die Durchgangsöffnungen 870 und 880 dienen dabei zur Durchführung der Spindel 7, die beispielsweise in der Figur 1 näher gezeigt und oben in Zusammenhang mit der Figur 1 beschrieben ist.

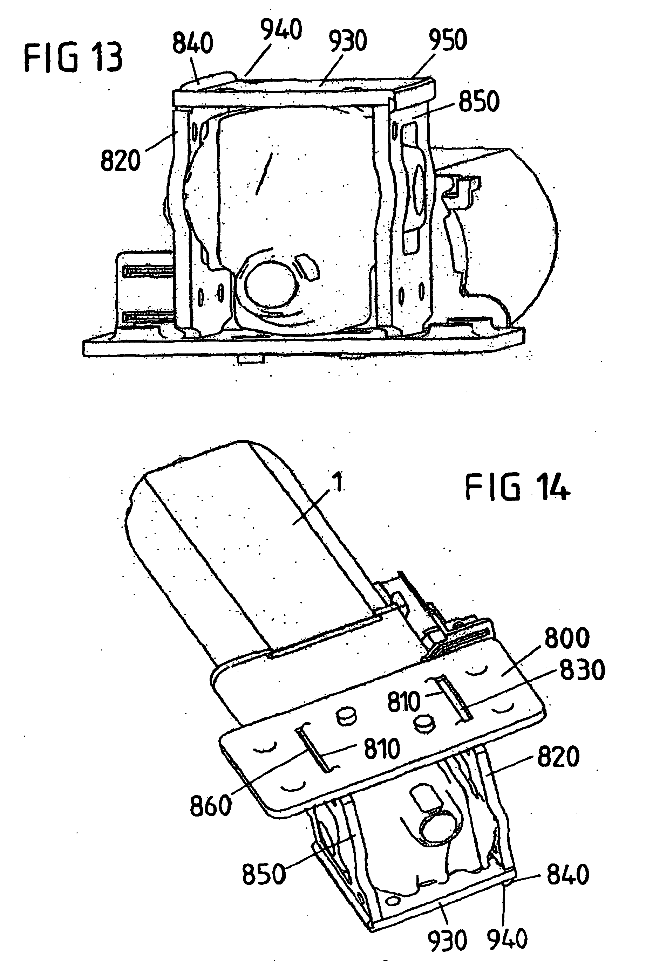

In der Figur 12 ist eine Deckplatte 930 dargestellt, die eine randseitige Ausnehmung 940 aufweist. Die randseitige Ausnehmung 940 dient - wie weiter unten im Zusammenhang mit den Figuren 13 bis 16 im Detail beschrieben wird - zur Aufnahme der weiteren Befestigungslasche 840 der einen Seitenplatte 820.

Die Figuren 13 und 14 zeigen den fertig montierten Antrieb, nachdem das Getriebegehäuse 4 zwischen die beiden Seitenplatten 820 und 850 eingesetzt worden ist. Insbesondere in der Figur 13 lässt sich gut erkennen, wie die konkaven bzw. konvexen Lagerschalenabschnitte 890, 900, 910 und 920 an dem im Befestigungsbereich konkav ausgeführten Getriebegehäuse 4 spielfrei anliegen. In der Figur 13 erkennt man darüber hinaus, wie die Deckplatte 930 an den beiden Seitenplatten 820 und 850 befestigt ist. So sieht man die weitere Befestigungslasche 840 der einen Seitenplatte 820, die in die randseitige Ausnehmung 940 der Deckplatte 930 eingreift. An der der randseitigen Ausnehmung 940 gegenüberliegenden Seite 950 der Deckplatte 930 liegt die Deckplatte 930 auf der zweiten Seitenplatte 850 auf.

Die Figur 14 zeigt den zusammengebauten Antrieb von der Rückseite. Man erkennt den Elektromotor 1 und die Grundplatte 800 sowie die schlitzförmigen Öffnungen 810, in die die Befestigungslasche 830 der einen Seitenplatte 820 sowie die Befestigungslasche 860 der zweiten Seitenplatte 850 eingreifen. Darüber hinaus erkennt man, wie die weitere Befesügungslasche 840 der einen Seitenplatte 820 in die randseitige Ausnehmung 940 der Deckplatte 930 eingreift.

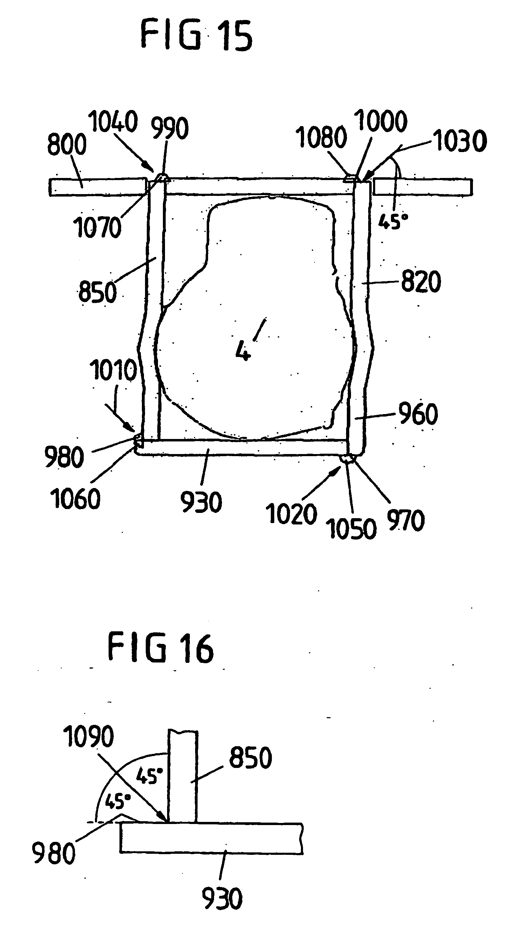

In den Figuren 15 und 16 ist im Detail dargestellt, wie die vier Lagerplatten 800, 820, 850 und 930 miteinander verbunden bzw. fixiert werden, nachdem das Getriebegehäuse 4 in die durch diese Lagerplatten gebildete Lagerschale 960 eingeführt worden ist. In den Verbindungsbereichen zwischen den aufeinander stehenden Lagerplatten 800, 820, 850 und 930 sind Kehlbereiche bzw. Kehlen ausgebildet, die in der Figur 15 die Bezugszeichen 970, 980, 990 und 1000 tragen. Die vier Lagerplatten sind dabei in diesen Kehlbereichen 970, 980, 990 und 1000 miteinander verschweißt, also durch "Kehlnahtschweißen". Kehlnahtschweißen weist gegenüber einem Schweißen an Stoßstellen zwischen nebeneinander liegenden Verbindungsteilen den Vorteil auf, dass es zu keinem Durchschweißen an der Nahtstelle kommen kann.

In der Figur 15 sind darüber hinaus Pfeile 1010, 1020, 1030 und 1040 eingezeichnet, die die Schweißrichtung eines Schweiß-Laserstrahls darstellen sollen. Es lässt sich erkennen, dass die Schweißrichtung des Laserlichtes in einem Winkel von ca. 45° zu den jeweils zu verbindenden Lagerplatten steht. Durch einen Winkel von ca. 45° wird eine besonders feste Schweißnaht gebildet. Die sich ausbildenden Schweißnähte tragen in der Figur 15 die Bezugszeichen 1050, 1060, 1070 und 1080.

In der Figur 16 ist die Verbindung zwischen der zweiten Seitenplatte 850 sowie der Deckplatte 930 noch einmal im Detail gezeigt. Man erkennt die Kehle 980, in die ein Laserstrahl 1090 einstrahlt. Der Laserstrahl 1090 weist dabei einen Winkel von ca. 45° zur zweiten Seitenplatte 850 sowie einen Winkel von ca. 45° zur Deckplatte 930 auf. Ein "Durchschweißen" kann also nicht auftreten.

### Bezugszeichenliste

| | |
|---|---|
| 1 | Elektromotor |
| 2 | Motorwelle |
| 3 | Getriebe |
| 4 | Getriebegehäuse |
| 40 | Gehäuseschale |
| 41 | Gehäusedeckel |
| 42, 43 | Wölbungen |
| 5, 6 | Lagerplatte |
| 51, 61 | Verbindungsschenkel |
| 52, 53 | laschenförmiger Seitenschenkel |
| 62, 63 | Seitenschenkel |
| 54, 64 | Wölbungen |
| 55, 65 | Durchgangsöffnung |
| 66 | fensterförmige Öffnung |
| 67 | Ausnehmung |
| 68 | Ausschnitt |
| 7 | Spindel |
| 70 | Verbindungslasche |
| 8 | Spindelmutter |
| 9 | Schneckenrad |
| 521, 522, 531, 532 661, 662 631, 632 | Seitenkanten |
| 800 | Grundplatte |
| 810 | Schlitzförmige Öffnungen |
| 820 | Seitenplatte |
| 830 | Befestigungslasche |
| 840 | Weitere Befestigungslasche |
| 850 | Zweite Seitenplatte |
| 860 | Befestigungslasche |
| 870, 880 | Durchgangsöffnungen |
| 890, 900, 910, 920 | Konkave bzw. konvexe Lagerschalenabschnitte |
| 930 | Deckplatte |
| 940 | Randseitige Ausnehmung |
| 960 | Lagerschale |
| 970, 980, 990, 1000 | Kehlbereiche bzw. Kehlen |
| 1010, 1020, 1030, 1040 | Pfeile für die Schweißrichtung |
| 1050, 1060, 1070, 1080 | Schweißnähte |
| 1090 | Laserstrahl |

## Patentansprüche

1. Spindel- oder Schneckenantrieb für Verstelleinrichtungen in Kraftfahrzeugen, insbesondere für Sitzverstelleinrichtungen, Fensterheber und Schiebedächer, mit einer feststehenden Spindel oder einer feststehenden Zahnstange, die an einem ersten von zwei relativ zueinander verstellbaren Teilen befestigt ist, mit einem Getriebe, das mit dem zweiten der relativ zueinander verstellbaren Teile verbunden ist, und mit einem Getriebegehäuse zur Aufnahme des Getriebes,
- wobei das Getriebegehäuse (4) spielfrei und um mindestens eine Achse schwenkbar von einer Lagerschale (5, 6) eingefasst ist und
- wobei das Getriebegehäuse (4) mindestens ein konkaves oder konvexes Gehäuseteil (42, 43) aufweist, das von mindestens einem konvexen oder konkaven Lagerschalenabschnitt (54, 64) umfasst ist, und
- wobei die Lagerschale aus zumindest zwei Lagerplatten gebildet ist, die jeweils spielfrei am Getriebegehäuse (4) anliegen und fixiert sind und das Getriebegehäuse (4) vollständig umfassen.

2. Antrieb nach Anspruch 1, **dadurch gekennzeichnet, dass** das Getriebegehäuse (4) aus Kunststoff und die Lagerschale (5, 6) aus einem zur Aufnahme von CrashKräften geeigneten Werkstoff, insbesondere aus einem metallischem Werkstoff, besteht.

3. Antrieb nach mindestens einem der voranstehenden Ansprüche, **dadurch gekennzeichnet, dass** die Lagerschale aus zwei ineinander steckbaren Lagerplatten (5, 6) besteht, die nach der Einfassung des Getriebegehäuses (4) miteinander verbindbar und an dem zweiten der relativ zueinander verstellbaren Teile befestigbar sind.

4. Antrieb nach Anspruch 3, **dadurch gekennzeichnet, dass** die Lagerplatten (5, 6) in Richtung der Längserstreckung (S1, S2) der Spindel (7) oder Zahnstange ineinander steckbar sind und Durchgangsöffnungen (55, 65) zur Durchführung der Spindel (7) oder Zahnstange aufweisen.

5. Antrieb nach Anspruch 3 oder 4, **dadurch gekennzeichnet, dass** die Lagerplatten (5, 6) U-förmig ausgebildet sind, wobei die Seitenschenkel (52, 53; 62, 63) ineinander greifen und die die Seitenschenkel (52, 53; 62, 63) miteinander verbindenden Verbindungsschenkel (51, 61) die Durchgangsöffnungen (55, 65) zur Durchführung der Spindel (7) oder Zahnstange und die konkaven bzw. konvexen Lagerschaleabschnitte (54, 64) aufweisen.

6. Antrieb nach Anspruch 5, **dadurch gekennzeichnet, dass** die konkaven bzw. konvexen Lagerschalenabschnitte (54, 64) zu beiden Seiten der Durchgangsöffnungen (55, 65) zur Durchführung der Spindel (7) oder Zahnstange angeordnet sind.

7. Antrieb nach Anspruch 5 oder 6, **dadurch gekennzeichnet, dass** die Seitenschenkel (52, 53) der einen Lagerplatte (5) als Laschen ausgebildet sind, die in den einen, mit einer fensterförmigen Öffnung (66) versehenen Seitenschenkel (62) und den anderen, mit einer U-förmigen Ausnehmung (67) versehenen Seitenschenkel (63) der anderen Lagerplatte (6) eingreifen.

8. Antrieb nach Anspruch 7, **dadurch gekennzeichnet, dass** der laschenförmige Seitenschenkel (53) der einen Lagerplatte (5) in Verbindungsrichtung der Lagerplatten (5, 6) kürzer als die U-förmige Ausnehmung (67) Ausnehmung (67) des Seitenschenkels (63) der anderen Lagerplatte (6) und der laschenförmige Seitenschenkel (52) der einen Lagerplatte (5) in Verbindungsrichtung der Lagerplatten (5, 6) durch einen die fensterförmige Öffnung (66) des korrespondierenden Seitenschenkels (62) der anderen Lagerplatte (6) erweiternden Ausschnitt (68) im Verbindungsschenkel (61) der anderen Lagerplatte (6) steckbar ist.

9. Antrieb nach Anspruch 8, **dadurch gekennzeichnet, dass** der laschenförmige Seitenschenkel (52) der einen Lagerplatte (5) in Verbindungsrichtung der Lagerplatten (5, 6) länger als die fensterförmige Öffnung (66) und der die fensterförmige Öffnung (66) umgebende Rahmen länger als der laschenförmige Seitenschenkel (52) ist, derart, dass an den in Verbindungsrichtung der Lagerplatten (5, 6) vorderen Enden des laschenförmigen Seitenschenkels (52) der einen Lagerplatte (5) und dem die fensterförmige Öffnung (66) umgebende Rahmen vorgesehene Befestigungsstellen (71, 72, 73) frei zugänglich sind.

10. Antrieb nach Anspruch 8 oder 9, **dadurch gekennzeichnet, dass** die Seitenschenkel (52, 53; 62, 63) der Lagerplatten (5, 6) im montierten Zustand der Verstelleinrichtung formschlüssig miteinander verbunden sind.

11. Antrieb nach Anspruch 10, **dadurch gekennzeichnet, dass** die Seitenschenkel (52, 53; 62, 63) der Lagerplatten (5, 6) über Schweisskonturen (74, 75, 76) miteinander verbunden sind.

12. Antrieb nach einem der Ansprüche 1 bis 2, **dadurch gekennzeichnet, dass** die Lagerschale eine Grundplatte (800), zwei Seitenplatten (820, 850) und eine Deckplatte (930) aufweist, wobei die Grundplatte (800) und die Deckplatte (930) im Wesentlichen parallel zueinander angeordnet sind und durch die im Wesentlichen parallel zueinander angeordneten Seitenplatten (820, 850) miteinander in Verbindung stehen.

13. Antrieb nach Anspruch 12, **dadurch gekennzeichnet, dass** die Grundplatte (800) zwei schlitzförmige Öffnungen (810) aufweist, von denen eine Öffnung zur Aufnahme einer Befestigungslasche (830) einer der beiden Seitenplatten (820) und von denen die andere Öffnung zur Aufnahme einer Befestigungslasche (860) der anderen der beiden Seitenplatten (850) dient

14. Antrieb nach Anspruch 13, **dadurch gekennzeichnet, dass** die eine Seitenplatte (820) eine weitere Befestigungslasche (840) aufweist, die an einer der einen Befestigungslasche (830) gegenüberliegenden Seite der Seitenplatte (820) angeordnet ist und in eine randseitige Ausnehmung (940) in der Deckplatte (930) eingreift.

15. Antrieb nach einen der vorangehenden Ansprüche 12 bis 14, **dadurch gekennzeichnet, dass** die Seitenplatten (820, 850) in Richtung der Längserstreckung (S1, S2) der Spindel (7) oder Zahnstange Durchgangsöffnungen (870, 880) zur Durchführung der Spindel (7) oder Zahnstange aufweisen.

16. Antrieb nach einem der vorangehenden Ansprüche 12 bis 15, **dadurch gekennzeichnet, dass** die Seitenplatten (820, 850) konkave bzw. konvexe Lägerschalenabschnitte (890, 900, 910, 920) aufweisen.

17. Antrieb nach Anspruch 16, **dadurch** gekennzeichet, dass die konkaven bzw. konvexen Lagerschalenabschnitte (890, 900, 910, 920) zu beiden Seiten der Durchgangsöffnungen (870, 880) zur Durchführung der Spindel oder Zahnstange angeordnet sind.

18. Antrieb nach einem der vorangehenden Ansprüche 12 bis 17, **dadurch gekennzeichnet, dass** die Grundplatte (800), die beiden Seitenplatten (820, 850) und die Deckplatte (930) zur Fixierung verschweißt sind.

19. Antrieb nach Anspruch 18, **dadurch gekennzeichnet, dass** die Platten (800, 820, 850, 930) laserverschweißt sind.

20. Antrieb nach Anspruch 19, **dadurch gekennzeichnet, dass** die Schweißnähte (1050, 1060, 1070, 1080) in Kehlen (970, 980, 990, 1000) liegen, die an den Verbindungsbereichen zwischen aufeinanderstehenden Platten gebildet sind.

21. Verfahren zur Herstellung einer Verstelleinrichtung nach mindestens einem der voranstehenden Ansprüche, wobei die Getriebeelemente (8, 9) nach ihrer Verbindung mit der Spindel (7) oder Zahnstange in eine Gehäuseschale (40) des Getriebegehäuses (4) eingesetzt und mit einem Antriebselement (20) der Motorwelle (2) verbunden werden, wobei ein Getriebedeckel (43) mit der Gehäuseschale (40) des Getriebegehäuses (4) zum Schließen des Getriebes (3) verbunden wird, wobei das fertiggestellte Getriebegehäuse (4) spielfrei von einer Lagerschale eingefasst wird, wobei als Getriebegehäuse (4) ein Gehäuse mit mindestens einem konkaven oder konvexen Gehäuseteil (42, 43) und als Lagerschale eine Lagerschale mit mindestens einem konvexen bzw. konkaven Lagerschalenabschnitt (54, 64) verwendet wird, und wobei das fertiggestellte Getriebegehäuse (4) vollständig von der Lagerschale eingefasst wird, indem zumindest zwei Lagerplatten der Lagerschale spielfrei zum Getriebegehäuse (4) justiert und fixiert werden.

22. Verfahren nach Anspruch 21, **dadurch gekennzeichnet, dass** die Lagerplatten (5, 6) von beiden Seiten über fensterförmige Durchgangsöffnungen (55, 65) auf die Spindel (7) aufgesteckt werden, dass die Seitenschenkel (52, 53; 62, 63) der Lagerplatten (5, 6) ineinandergeschoben werden, bis die konkaven bzw. konvexen Lagerschalenabschnitte (54, 64) der Lagerplatten (5, 6) an den konkaven bzw. konvexen Gehäuseteilen (42, 43) des Getriebegehäuses (4) spielfrei anliegen und dass die aneinanderstoßenden Seitenkanten (521, 522, 661, 662; 531, 532, 631, 632) der Seitenschenkel (52, 62 bzw. 53, 63) der Lagerplatten (5, 6) mittels Laserschweißung zumindest über einen Teil ihrer Länge miteinander verbunden werden.

23. Verfahren nach Anspruch 22, **dadurch gekennzeichnet, dass** das eine Ende der Spindel (7) mit einer Verbindungslasche (70) verbunden wird, die an dem ersten der beiden relativ zueinander verstellbaren Teile befestigt wird, und dass die miteinander verbundenen Lagerplatten (5, 6) mit dem zweiten der relativ zueinander verstellbaren Teile verbunden werden.

24. Verfahren nach Anspruch 23, **dadurch gekennzeichnet, dass** die Lagerschale aus vier Lagerplatten (800, 820, 850, 930) gebildet wird, indem auf eine Grundplatte (800) zwei Seitenplatten (820, 850) aufgesteckt werden, zwischen die beiden Seitenplatten (820, 850) das Getriebegehäuse (4) eingesetzt wird, auf die zwei Seitenplatten (820, 850) eine Deckplatte (930) aufgebracht wird und die vier Lagerplatten (800, 820, 850, 930) spielfrei zueinander ausgerichtet und miteinander fixiert werden.

25. Verfahren nach Anspruch 24, **dadurch gekennzeichnet, dass** die zwei Seitenplatten (820, 850) von beiden Seiten über fensterförmige Durchgangsöffnungen (870, 880) auf die Spindel (7) aufgesteckt werden und ausgerichtet werden, bis die konkaven bzw. konvexen Lagerschalenabschnitte (890, 900, 910, 920) der Seitenplatten (820, 850) an den konkaven bzw. konvexen Gehäuseteilen des Getriebegehäuses (4) spielfrei anliegen.

26. Verfahren nach Anspruch 25, **dadurch gekennzeichnet, dass** die vier Lagerplatten (800, 820, 850, 930) durch Schweißen, insbesondere Laserschweißen, miteinander fixiert werden.

27. Verfahren nach Anspruch 26, **dadurch gekennzeichnet, dass** das Laserschweißen in Kehlbereichen (970, 980, 990, 1000) erfolgt, die im Verbindungsbereich der aufeinanderstehenden Lagerplatten gebildet sind.

28. Verfahren nach Anspruch 27, **dadurch gekennzeichnet, dass** das Laserschweißen in einem Winkel von jeweils ca. 45° zu den zu verbindenden Lagerplatten erfolgt.

## Claims

1. Spindle or worm drive for adjustment devices in motor vehicles, especially for seat adjusting devices, window lifters and sliding roofs, with a fixed spindle or a fixed toothed rack which is fixed on a first of two parts which can be moved relative to each other, with a gear mechanism which is connected to the second of the relatively movable parts, and with a gear housing for receiving the gear mechanism,
- wherein the gear housing (4) is enclosed free from backlash and able to pivot about at least one axis by a bearing shell (5, 6), and
- wherein the gear housing (4) has at least one concave or convex housing part (42, 43) which is surrounded by at least one convex or concave bearing shell section (54, 64), and
- wherein the bearing shell is formed from at least two bearing plates which each bear and are fixed free from backlash against the gear housing (4) and completely surround the gear housing (4).

2. Drive according to claim 1, **characterised in that** the gear housing (4) is made from plastics and the bearing shell (5, 6) is made from a material, more particularly a metal material, which is suitable to take up crash forces.

3. Drive according to at least one of the preceding claims, **characterised in that** the bearing shell consists of two interfitting bearing plates (5, 6) which after inserting the gear housing (4) can be connected together and fixed on the second of the relatively movable parts.

4. Drive according to claim 3, **characterised in that** the bearing plates (5, 6) can be fitted in each other in the direction of the longitudinal extension (S1, S2) of the spindle (7) or toothed rack and have through openings (55, 65) for passing through the spindle (7) or toothed rack.

5. Drive according to claim 3 or 4, **characterised in that** the bearing plates (5, 6) are U-shaped whereby the side arms (52, 53; 62, 63) engage in each other and the connecting arms (51, 61) which connect the side arms (52, 53; 62, 63) together have the through openings (55, 65) for passing through the spindle (7) or toothed rack and the concave and convex bearing shell sections (54, 64).

6. Drive according to claim 5, **characterised in that** the concave and convex bearing shell sections (54, 64) are arranged on both sides of the through openings (55, 65) for passing through the spindle (7) or toothed rack.

7. Drive according to claim 5 or 6, **characterised in that** the side arms (52, 53) of the one bearing plate (5) are designed as tabs which engage in the one side arm (62) provided with a window shaped opening (66) and in the other side arm (63) of the other bearing plate (6) provided with a U-shaped recess (67).

8. Drive according to claim 7, **characterised in that** the tab shaped side arm (53) of the one bearing plate (5) in the connecting direction of the bearing plates (5, 6) is shorter than the U-shaped recess (67) of the side arm (63) of the other bearing plate (6) and the tab-shaped side arm (52) of the one bearing plate (5) in the connecting direction of the bearing plates (5, 6) can be pushed through a cut-out section (68) in the connecting arm (61) of the other bearing plate (6) which widens out the window shaped opening (66) of the corresponding side arm (62) of the other bearing plate (6).

9. Drive according to claim 8, **characterised in that** the tab shaped side arm (52) of the one bearing plate (5) in the connecting direction of the bearing plates (5, 6) is longer than the window shaped opening (66) and the frame surrounding the window shaped opening (66) is longer than the tab-shaped side arm (52) so that at the front ends of the tab shaped side arm (52) of the one bearing plate (5) in the connecting direction of the bearing plates (5, 6) and on the frame surrounding the window shaped opening (66) there are freely accessible fixing points (71, 72, 73).

10. Drive according to claim 8 or 9, **characterised in that** the side arms (52, 53; 62, 63) of the bearing plates (5, 6) in the assembled state of the adjusting device are positively connected together.

11. Drive according to claim 10, **characterised in that** the side arms (52, 53; 62, 63) of the bearing plates (5 6) are connected together through welding contours (74, 75, 76).

12. Drive according to one of claims 1 to 2, **characterised in that** the bearing shell has a base plate (800), two side plates (820, 850) and a top plate (930) whereby the base plate (800) and the top plate (930) are arranged substantially parallel to each other and are connected together through the side plates (820, 850) which are arranged substantially parallel to each other.

13. Drive according to claim 12 **characterised in that** the base plate (800) has two slit like openings (810) of which one opening serves to receive a fixing tab (830) of one of the two side plates (820) and of which the other opening serves to receive a fixing tab (860) of the other of the two side plates (850).

14. Drive according to claim 13 **characterised in that** the one side plate (820) has a further fixing tab (840) which is mounted on a side of the side plate (820) opposite the one fixing tab (830) and engages in a recess (940) in the edge of the top plate (930).

15. Drive according to one of the preceding claims 12 to 14, **characterised in that** the side plates (820, 850) have in the direction of the longitudinal extension (S1, S2) of the spindle (7) or toothed rack full length openings (870, 880) for passing through the spindle (7) or toothed rack.

16. Drive according to one of the preceding claims 12 to 15 **characterised in that** the side plates (820, 850) have concave or convex bearing shell sections (890, 900, 910, 920).

17. Drive according to claim 16, **characterised in that** the concave or convex bearing shell sections (890, 900, 910, 920) are arranged on both sides of the full-length openings (870, 880) for passing through the spindle or toothed rack.

18. Drive according to one of the preceding claims 12 to 17, **characterised in that** the base plate (800), the two side plates (820, 850) and the top plate (930) are welded for fixing.

19. Drive according to claim 18, **characterised in that** the plates (800, 820, 850, 930) are laser-welded.

20. Drive according to claim 19, **characterised in that** the welded seams (1050, 1060, 1070, 1080) lie in grooves (970, 980, 990, 1000) which are formed at the connecting regions between plates standing on each other.

21. Method for manufacturing an adjustment device according to at least one of the preceding claims, wherein the gear elements (8, 9) after their connection with the spindle (7) or toothed rack are inserted into a housing shell (40) of the gear housing (4) and are connected to a drive element (20) of the motor shaft (2), wherein a gear cover (43) is connected to the housing shell (40) of the gear housing (4) to close up the gear mechanism (3), wherein the finished made gear housing (4) is enclosed free from backlash by a bearing shell, wherein as gear housing (4) is used a housing having at least one concave or convex housing part (42, 43) and as bearing shell is used a bearing shell having at least a convex and concave bearing shell section (54, 64), and wherein the finished gear housing (4) is surrounded completely by the bearing shell in that at least two bearing plates of the bearing shell are adjusted and fixed without play relative to the gear housing (4).

22. Method according to claim 21, **characterised in that** the bearing plates (5, 6) are pushed from both sides through window shaped through openings (55, 65) onto the spindle (7), that the side arms (52, 53; 62, 63) of the bearing plates (5, 6) are pushed into each other until the concave and convex bearing shell sections (54, 64) of the bearing plates (5, 6) bear free from backlash against the concave and convex housing parts (42, 43) of the gear housing (4) and that the abutting side edges (521, 522, 661, 662; 531, 532, 631, 632) of the side arms (52, 62 and 53, 63) of the bearing plates (5, 6) are connected together by laser welding at least over a part of their length.

23. Method according to claim 22, **characterised in that** the one end of the spindle (7) is connected to a connecting tab (70) which is fixed on the first of the two relatively movable parts, and that the bearing plates (5, 6) which are connected together are connected to the second of the relatively movable parts.

24. Method according to claim 23, **characterised in that** the bearing shell is formed from four bearing plates (800, 820, 850, 930) **in that** two side plates (820, 850) are pushed onto a base plate (800), the gear housing (4) is inserted between the two side plates (820, 850), a top plate (930) is fitted onto the two side plates (820, 850) and the four bearing plates (800, 820, 850, 930) are aligned relative to each other free from backlash and fixed together.

25. Method according to claim 24, **characterised in that** the two side plates (820, 850) are pushed from both sides through window shaped full-length openings (870, 880) onto the spindle (7) and aligned until the concave and convex bearing shell sections (890, 900, 910, 920) of the side plates (820, 850) bear free from backlash against the concave and convex housing parts of the gear housing (4).

26. Method according to claim 25, **characterised in that** the four bearing plates (800, 820, 850, 930) are fixed together by welding, more particularly by laser welding.

27. Method according to claim 26, **characterised in that** the laser welding is carried out in the groove zones (970, 980, 990, 1000) which are formed in the connecting region of the bearing plates which stand on each other.

28. Method according to claim 27, **characterised in that** the laser welding is carried out at an angle of about 45° to the bearing plates which are to be connected.

## Revendications

1. Entraînement à broche ou à vis sans fin pour des systèmes de réglage dans des véhicules automobiles, en particulier des systèmes de réglage de siège, des lève-vitres et des toits ouvrants, comprenant une broche stationnaire ou une crémaillère stationnaire, qui est fixée à une première pièce parmi deux pièces réglables l'une par rapport à l'autre, comprenant un mécanisme, relié à la deuxième des deux pièces réglables l'une par rapport à l'autre, et comprenant un boîtier de mécanisme pour recevoir le mécanisme,
- dans lequel le boîtier de mécanisme (4) est enserré par une coque de palier (5, 6) sans jeu et en pivotement autour d'au moins un axe, et
- dans lequel le boîtier de mécanisme (4) comprend au moins une partie de boîtier concave ou convexe (42, 43), qui est enserrée par au moins un tronçon de coque de palier (54, 64) convexe ou concave, et
- dans lequel la coque de palier est formée par au moins deux plaques de palier qui sont respectivement appliquées et fixées sans jeu contre le boîtier de mécanisme (4), et qui enserrent complètement le boîtier de mécanisme (4).

2. Entraînement selon la revendication 1, **caractérisé en ce que** le boîtier de mécanisme (4) est en matière plastique et la coque de palier (5, 6) est en un matériau approprié pour encaisser des forces en cas de collision, en particulier en un matériau métallique.

3. Entraînement selon l'une au moins des revendications précédentes, **caractérisé en ce que** la coque de palier est formée de deux plaques de palier (5, 6) emboîtables l'une dans l'autre, qui peuvent être reliées l'une à l'autre après avoir enserré le boîtier de mécanisme (4) et qui peuvent être fixées sur la deuxième des deux pièces réglables l'une par rapport à l'autre.

4. Entraînement selon la revendication 3, **caractérisé en ce que** les plaques de palier (5, 6) sont emboîtables l'une dans l'autre dans la direction de l'extension longitudinale (S1, S2) de la broche (7) ou de la crémaillère, et présentent des ouvertures traversantes (55, 65) pour la traversée de la broche (7) ou de la crémaillère.

5. Entraînement selon la revendication 3 ou 4, **caractérisé en ce que** les plaques de palier (5, 6) sont réalisées en forme de U, les branches latérales (52, 53 ; 62, 63) s'engageant les unes dans les autres et les branches de liaison (51, 61) qui relient les branches latérales (52, 53 ; 62, 63) les unes aux autres présentant les ouvertures traversantes (55, 65) pour la traversée de la broche (7) ou de la crémaillère et présentant les tronçons de coque de palier concave ou convexe (54, 64).

6. Entraînement selon la revendication 5, **caractérisé en ce que** les tronçons de coque de palier concaves ou convexes (54, 64) sont agencés des deux côtés des ouvertures traversantes (55, 65) pour la traversée de la broche (7) ou de la crémaillère.

7. Entraînement selon la revendication 5 ou 6, **caractérisé en ce que** les branches latérales (52, 53) de l'une des plaques de palier (5) sont réalisées comme des pattes qui s'engagent dans l'une des branches latérales (62) pourvue d'une ouverture (66) en forme de fenêtre, et dans l'autre branche latérale (63) pourvue d'une ouverture en forme de U (67) de l'autre plaque de palier (6).

8. Entraînement selon la revendication 7, **caractérisé en ce que** la branche latérale (53) en forme de patte de l'une des plaques de palier (5) est plus courte dans la direction de jonction des plaques de palier (5, 6) que l'évidement (67) en forme de U de la branche latérale (62) de l'autre plaque de palier (6), et la branche de palier en forme de patte (52) de l'une des plaques de palier (5) est emboîtable dans la direction de liaison des plaques de palier (5, 6) à travers une découpe (68), dans la branche de liaison (61) de l'autre plaque de palier (6), qui élargit l'ouverture en forme de fenêtre de la branche latérale correspondante (62) de l'autre plaque de palier (6).

9. Entraînement selon la revendication 8, **caractérisé en ce que** la branche latérale en forme de patte (52) de l'une des plaques de palier (5) est plus longue dans la direction de liaison des plaques de palier (5, 6) que l'ouverture en forme de fenêtre (66) et le cadre qui entoure l'ouverture en forme de fenêtre (66) est plus long que la branche latérale en forme de patte (52) de telle façon que les emplacements de fixation (71, 72, 73) prévus aux extrémités antérieures, dans la direction de liaison des plaques de palier (5, 6), de la branche latérale en forme de patte (52) de l'une des plaques de palier (5) et sur le cadre qui entoure l'ouverture en forme de fenêtre (66) sont librement accessibles.

10. Entraînement selon la revendication 8 ou 9, **caractérisé en ce que** les branches latérales (52, 53 ; 62, 63) des plaques de palier (5, 6) sont reliées les unes aux autres par coopération de formes dans la situation montée du système de réglage.

11. Entraînement selon la revendication 10, **caractérisé en ce que** les branches latérales (52, 53 ; 62, 63) des plaques de palier (5, 6) sont reliées les unes aux autres via des contours de soudure (74, 75, 76).

12. Entraînement selon l'une des revendications 1 et 2, **caractérisé en ce que** la coque de palier comprend une plaque de base (800), deux plaques latérales (820, 850) et une plaque de couverture (930), la plaque de base (800) et la plaque de couverture (930) sont agencées sensiblement parallèlement l'une à l'autre, et sont reliées l'une à l'autre au moyen des plaques latérales (820, 850) agencées sensiblement parallèlement l'une à l'autre.

13. Entraînement selon la revendication 12, **caractérisé en ce que** la plaque de base (800) comporte deux ouvertures en forme de fente (810), parmi lesquelles une ouverture sert à recevoir une patte de fixation (830) de l'une des deux plaques latérales (820), et parmi lesquelles l'autre ouverture sert à recevoir une patte de fixation (860) de l'autre des deux plaques latérales (850).

14. Entraînement selon la revendication 13, **caractérisé en ce que** l'une des plaques latérales (820) comporte une autre patte de fixation (840), laquelle est agencée sur un côté de la plaque latérale (820) opposé à l'une des pattes de fixation (830) et s'engage dans un évidement de bordure (940) dans la plaque de couverture (930).

15. Entraînement selon l'une des revendications 12 à 14, **caractérisé en ce que** les plaques latérales (820, 850) comportent, en direction de l'extension longitudinale (S1, S2) de la broche (7) ou de la crémaillère, des ouvertures traversantes (870, 880) pour la traversée de la broche (7) ou de la crémaillère.

16. Entraînement selon l'une des revendications 12 à 15, **caractérisé en ce que** les plaques latérales (820, 850) comprennent des tronçons de coque de palier concaves ou convexes (890, 900, 910, 920).

17. Entraînement selon la revendication 16, **caractérisé en ce que** les tronçons de coque de palier concaves ou convexes (890, 900, 910, 920) sont agencés des deux côtés des ouvertures traversantes (870, 880) pour la traversée de la broche ou de la crémaillère.

18. Entraînement selon l'une des revendications 12 à 17, **caractérisé en ce que** la plaque de base (800), les deux plaques latérales (820, 850) et la plaque de couverture (930) sont soudées pour la fixation.

19. Entraînement selon la revendication 18, **caractérisé en ce que** les plaques (800, 820, 850, 930) sont soudées au laser.

20. Entraînement selon la revendication 19, **caractérisé en ce que** les cordons de soudure (1050, 1060, 1070, 1080) sont situés dans des gorges (970, 980, 990, 1000) qui sont formées au niveau des zones de liaison des plaques posées les unes sur les autres.

21. Procédé pour la réalisation d'un système de réglage selon l'une au moins des revendications précédentes, dans lequel les éléments de mécanisme (8, 9) sont mis en place, après leur jonction avec la broche (7) ou avec la crémaillère, dans une coque (40) du boîtier de mécanisme (4) et sont reliées à un élément d'entraînement (20) de l'arbre moteur (2), dans lequel un couvercle de mécanisme (43) est relié à la coque (40) du boîtier de mécanisme (4) pour fermer le mécanisme (3), dans lequel le boîtier de mécanisme terminé (4) est enserré sans jeu par une coque de palier, dans lequel on utilise en guise de boîtier de mécanisme (4) un boîtier avec au moins une partie de boîtier concave ou convexe (42, 43), et on utilise en guise de coque de palier une coque de palier avec au moins un tronçon de coque de palier convexe ou concave (54, 64), et dans lequel le boîtier de mécanisme terminé (4) est entièrement enserré par la coque de palier en ajustant et en fixant au moins deux plaques de palier de la coque de palier sans jeu par rapport au boîtier de mécanisme (4).

22. Procédé selon la revendication 21, **caractérisé en ce que** les plaques de palier (5, 6) sont enfilées sur la broche (7) depuis les deux côtés des ouvertures traversantes en forme de fenêtres (55, 65), **en ce que** les branches latérales (52, 53 ; 62, 63) des plaques de palier (5, 6) sont enfilées les unes dans les autres jusqu'à ce que les tronçons de coque de palier concaves ou convexes (54, 64) des plaques de palier (5, 6) s'appliquent sans jeu contre les parties de boîtier concaves ou convexes (42, 43) du boîtier de mécanisme, et **en ce que** les arêtes latérales (521, 522, 661, 662 ; 531, 532, 631, 632), en butée les unes contre les autres, des branches latérales (52, 62, respectivement 53, 63) des plaques de palier (5, 6) sont reliées les unes aux autres au moyen d'un soudage au laser sur au moins une partie de leur longueur.

23. Procédé selon la revendication 22, **caractérisé en ce que** l'une des extrémités de la broche (7) est reliée à une patte de liaison (70) qui est fixée à la première des deux pièces réglables l'une par rapport à l'autre, et **en ce que** les plaques de palier (5, 6) reliées l'une à l'autre sont reliées à la deuxième des deux plaques réglables l'une par rapport à l'autre.

24. Procédé selon la revendication 23, **caractérisé en ce que** les coques de palier sont formées de quatre plaques de palier (800, 820, 850, 930) en ce que deux plaques latérales (820, 850) sont enfichées sur une plaque de base (800), le boîtier de mécanisme (4) est mis en place entre les deux plaques latérales (820, 850), une plaque de couverture (930) est apposée sur les deux plaques latérales (820, 850), et les quatre plaques de palier (800, 820, 850, 930) sont orientées sans jeu les unes par rapport aux autres et fixées les unes aux autres.

25. Procédé selon la revendication 24, **caractérisé en ce que** les deux plaques latérales (820, 850) sont enfichées sur la broche (7) depuis les deux côtés via des ouvertures de traversée (870, 880) en forme de fenêtres et sont alignées jusqu'à ce que les tronçons de coque de palier concaves ou convexes (890, 900, 910, 920) des plaques latérales (820, 850) s'appliquent sans jeu contre les parties de boîtier concaves ou convexes du boîtier de mécanisme (4).

26. Procédé selon la revendication 25, **caractérisé en ce que** les quatre plaques de palier (800, 820, 850, 930) sont fixées les unes aux autres par soudage, en particulier soudage au laser.

27. Procédé selon la revendication 26, **caractérisé en ce que** le soudage au laser a lieu dans des zones en forme de gorges (970, 980, 990, 1000) qui sont ménagées dans la zone de liaison des plaques de palier posées les unes sur les autres.

28. Procédé selon la revendication 27, **caractérisé en ce que** le soudage au laser a lieu sous un angle respectif d'environ 45° par rapport aux plaques de palier qu'il s'agit de relier.
